# EUROPEAN PATENT APPLICATION

(11) **EP 3 553 702 A1**
(43) Date of publication of application: **16.10.2019**
(21) Application number: 17877830.4
(22) Date of filing: 11.10.2017
(51) Int. Cl.: G06K 9/32, G06K 9/34, H04N 5/232

(54) **IMAGE RECOGNITION-BASED COMMUNICATION METHOD AND DEVICE**

(30) Priority: 07.12.2016 CN 201611116384
(71) Applicant: ZTE Corporation, Shenzhen, Guangdong 518057 (CN)
(72) Inventor: XIE, Dong, Shenzhen Guangdong 518057 (CN)
(74) Representative: Aipex B.V.
(86) International application number: PCT/CN2017/105775
(87) International publication number: WO 2018/103450

(57) **Abstract**

Provided is an image recognition-based communication method and apparatus. A to-be-acquired picture is focused on according to a determined focus area, and picture information in the focus area is processed to obtain corresponding text information. In this way, image recognition can be conveniently implemented, thereby improving efficiency of image recognition, improving communication efficiency between RCS clients, and improving user experience.

## Description

### TECHNICAL FIELD

The present application relates to the field of communications, for example, relates to an image recognition-based communication method and apparatus.

### BACKGROUND

In daily life, users usually need to transmit the viewed content to others through an application on a terminal. A rich communication suite (RCS) function has a relatively high frequency of use. An RCS client system having the RCS function may directly integrate the original portals such as "call", "message" and "contact" in the terminal with the terminal at the operator level, so as to obtain new call, new message, and new contact. A common way for a client program such as WeChat and QQ to transmit image information is that the client program turns on the camera to take a picture of the scene, and sends the information in the form of a picture to a message receiver; or a third party program is started to process the picture. Image recognition is used to obtain the text content, then the text content is edited, the part related to the information to be expressed are retained, the rest is deleted, the appropriate description is added, and the text message is sent to the message receiver. However, in the scheme of recognizing text in the picture, the recognition accuracy of text information is low and the user experience is not good due to limitation of the definition of the picture and the amount of text content in the picture.

### SUMMARY

Embodiments of the present invention provide an image recognition-based communication method and apparatus, so as to solve the problem of low accuracy and efficiency of image information identification during information transmission between clients.

An embodiment of the present invention provides an image recognition-based communication method. The method includes the steps described below.

A to-be-acquired picture is focused on according to a determined focus area.

Picture information in the focus area is processed to obtain corresponding text information.

An embodiment of the present invention further provides an image recognition-based communication apparatus. The apparatus includes an image acquisition module and a content processing module.

The image acquisition module is configured to focus on a to-be-acquired picture according to a determined focus area.

The content processing module is configured to process picture information in the focus area to obtain corresponding text information.

An embodiment of the present invention further provides a computer storage medium, which is configured to store computer-executable instructions for executing any image recognition-based communication method described above.

An embodiment of the present invention further provides an electronic device. The electronic device includes: at least one processor; and a memory which is in a communication connection with the at least one processor.

The memory stores instructions which are executable by the at least one processor. The at least one processor executes the instructions to execute the method described above.

According to the image recognition-based communication method and apparatus and the computer storage medium provided in the embodiments of the present invention, the to-be-acquired picture is focused on according to the determined focus area, and the picture information in the focus area is processed to obtain the corresponding text information. In this way, image recognition can be conveniently implemented, thereby improving efficiency of image recognition, improving communication efficiency between RCS clients, and improving user experience.

### BRIEF DESCRIPTION OF DRAWINGS

FIG. 1 is a flowchart of an image recognition-based communication method according to an embodiment 1 of the present invention;
FIG. 2 is a schematic diagram of an image recognition-based communication apparatus according to an embodiment 2 of the present invention;
FIG. 3 is a schematic diagram of an image recognition-based communication apparatus according to an embodiment 3 of the present invention;
FIG. 4 is a flowchart of an image recognition-based communication method according to the embodiment 3 of the present invention;
FIG. 5 is a another flowchart of the image recognition-based communication method according to the embodiment 3 of the present invention; and
FIG. 6 is a structure diagram of an electronic device according to an embodiment of the present invention.

### DETAILED DESCRIPTION

The present invention will be described in detail through embodiments in conjunction with the drawings.

### Embodiment 1:

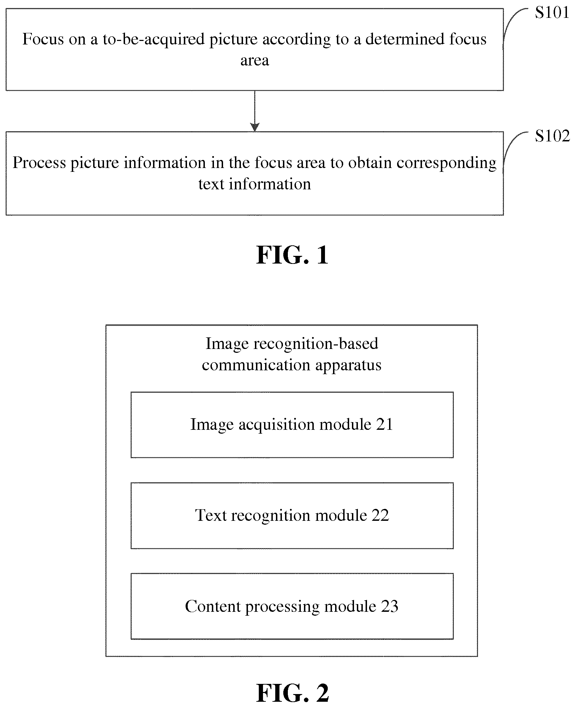

The embodiment of the present invention provides an image recognition-based communication method. Referring to FIG. 1, the method includes the steps described below.

In step S101, a scanned picture is focused on according to a determined focus area.

In step S102, picture information in the focus area is processed into corresponding text information.

In the embodiment, picture scanning may include: scanning of the actual scene, which may be referred to as shooting. That is, a camera module on the terminal is started to acquire an image. This process may be referred to as scanning in the embodiments of the present invention. In the process of scanning (shooting), the focus area is sharpest and is generally the focus on shooting of the user. The focus area is an area within a certain range from a focus point. The focus point is a point at which the acquired image is sharpest. The image has high sharpness in the area within a certain range from this point, and this area is referred to as the focus area.

In the step S101 of image acquisition, in the information transmission between the RCS clients and when an image acquisition instruction is received, a camera is started and an image is acquired through the camera. When the image is acquired by the camera, position information of the focus point selected on the acquired image is received, the focal length is adjusted according to the position information, the magnification of the picture is adjusted according to a scaling factor corresponding to the font size of the picture in the focus area, and then the image is acquired according to the adjusted acquisition parameter. The focus point may be a certain point in the image selected by the user, or may be a focus point preset as needed. After the picture is obtained through image acquisition, the text content in the focus area of the picture is recognized. Then, the recognized text content is optimized to obtain to-be-sent text content, and the to-be-sent content is sent to a target RCS client.

In the embodiment, before the step S102, the method may further include that the image is scaled according to a preset scaling rule. The step of scaling the image according to the preset scaling rule includes: determining a scaling factor corresponding to the picture according to a font size of the picture, and scaling the image according to the scaling factor. In the embodiment, a font size suitable for a viewer to read is determined as a standard font size. A calculation formula of the scaling factor may be: scaling factor k = picture font size / standard font size. The standard font size is a preset font size suitable for viewing and reading, and the unit is "point" abbreviated as "p". The font size refers to the size of a character displayed on a screen or a print medium. Each character is processed as a square, and the diagonal length of the square is measured to calculate the size, which is converted to be in units of "points". After text recognition, the corresponding text area of the original picture is found according to the text content and the size of the text in the corresponding text area is measured and converted to be in units of "points", so as to obtain the picture font size. The scaling factor k is the picture font size divided by the standard font size, and is dimensionless. During image acquisition, the image magnification is controlled according to this parameter to make the picture reach a preset state. If the factor k is equal to 1, the image is suitable for reading and recognition, and no adjustment is needed. If the factor k is greater than 1, the displayed image is too large, and the magnification of the image needs to be reduced. If the factor k is less than 1, the displayed image is too small, and the magnification of the image is needed to be increased.

Before the picture information in the focus area is process to obtain the corresponding text information, the method further includes that segmentation and tilt correction are performed on the picture in the focus area to obtain a main content area, and at least one of following algorithms is performed on the main content area: denoising, enhancing, smoothing, and sharpening. The step of recognizing the area in which the focus point is located to obtain the text content includes pre-processing the picture after the picture is obtained. The pre-processing includes segmentation, tilt correction and the like on the picture to obtain the main area content. The main content area includes a region in which text content exists in the focus area. Then, processing such as denoising, enhancing, smoothing and sharpening is performed on the main content area. The text content of the main content area is obtained through feature extraction and/or dimensionality reduction. The obtained text content is stored in a certain format, for example, the storage format of the font, the color, the form of the text content may be preset, and then the text content is stored according to the storage format.

The step in which the picture information in the focus area is processed to obtain the corresponding text information includes that the recognized text content is checked and wrong text is corrected to obtain more accurate text information, and corrected file information is normalized. After the text content is obtained, the text content is checked to determine whether wrong text exists. If wrong text exists, a network lexicon or a local lexicon may be called for modifying a wrong word so as to get more accurate text information. Then, the corrected text content is normalized and the accuracy of the normalized result is decided. The normalization of the corrected text content includes normalization of the information such as the font and the number of words of the text content. After the text content is obtained, the text content may be corrected and optimized through a processing mode such as lexical analysis, grammar analysis and semantic analysis to obtain more accurate text information. Through the above-mentioned correction processing and normalization processing of the text content, the accuracy of the text content can be improved, thereby improving the accuracy of the information interaction and improving the user experience. The optimized to-be-sent text content is obtained, and then sent to the target information receiver.

In the embodiment, when the focal length is adjusted, the magnification of the picture may be set according to the recognition result of the previous recognition of the text content, for example, the magnification of the image may be adjusted according to the font size of the previously recognized text, so that the picture enlargement effect is further improved.

After the step S102, the image recognition-based communication method provided in the embodiment may further include that point of interest (POI) matching is performed on the to-be-sent text content, an accuracy decision is performed on a matching result, and to-be-sent text content passing the accuracy decision is sent. The image recognition-based communication method provided in the embodiment can implement capture of the POI and help the user to quickly recognize the content of interest, thereby improving communication efficiency. For example, the POI may be preset, and an index is created in advance for the keyword in the POI. The index method may be a B-tree index. After the text content is obtained, POI matching is performed on the text content, the accuracy decision is performed on the matching result, and the to-be-sent text content passing the accuracy decision is sent. If the POI is "restaurant", text content including the "restaurant" information may be screened out from the text content. Then it is decided whether the text content including the "restaurant" information is accurate, and the accurate text content is sent to the information receiver. The step in which it is decided whether the text content is accurate may be that it is decided whether the text content really matches the set POI. After the accuracy of the matching is determined, the text content is sent to the information receiver. In addition, in order to improve storage efficiency, the POI may be compressed and stored using the compression algorithm of zip.

In the image recognition-based communication method provided in the embodiment, a to-be-scanned picture is focused on according to a determined focus area, and picture information in the focus area is processed to obtain corresponding text information. That is, image recognition can be conveniently implemented, thereby improving efficiency of image recognition, improving communication efficiency between RCS clients, and improving user experience.

### Embodiment 2:

The embodiment provides an image recognition-based communication apparatus. Referring to FIG. 2, the apparatus includes an image acquisition module 21 and a content processing module 23. The image acquisition module 21 is configured to focus on a to-be-acquired picture according to a determined focus area. The content processing module 23 is configured to process picture information in the focus area to obtain corresponding text information.

When information is transmitted between RCS clients, the image acquisition module 21, upon receiving an image acquisition instruction, turns on a camera to acquire an image; receives position information of the focus point selected on the acquired image, adjusts the focal length according to the position information, adjusts the magnification of the picture according to a scaling factor corresponding to the font size of the picture in the focus area, and then acquires the image according to the adjusted acquisition parameter. The focus point may be a certain point in the image selected by the user, or may be a focus point preset as needed. After the image acquisition module 21 obtains a picture by image acquisition, the content processing module 23 processes the picture information to obtain corresponding text information.

The image acquisition module 21 in the embodiment may further be configured to: determine a scaling factor corresponding to the picture according to a font size of the picture, and scale the picture according to the scaling factor. That is, the scaling factor of the picture may be set according to the ratio of the preset standard font size to the picture font size.

The embodiment may further include a text recognition module 22. The text recognition module 22 is configured to perform segmentation and tilt correction on the picture in the focus area to obtain a main content area, and perform at least one of the following algorithms on the main content area: denoising, enhancing, smoothing, and sharpening. After the image acquisition module 21 obtains the picture, the text recognition module 22 pre-processes the picture. The pre-processing includes performing segmentation, tilt correction and the like on the picture to obtain the main area content. The main content area includes a region in which text content exists in the focus area. Then, the text recognition module 22 performs processing such as denoising, enhancing, smoothing and sharpening on the main content area to obtain the text content of the main content area. The text content of the main content area may be obtained through feature extraction and/or dimensionality reduction. The obtained text content is stored in a certain format, for example, the storage format of the font, the color, the form of the text content may be preset, and then the text content is stored according to the storage format.

The content processing module 23 provided in the embodiment may further be configured to check the recognized text content and correct the wrong text to obtain more accurate text information, and normalize corrected file information. After the text recognition module 22 obtains the text content, the content processing module 23 checks the obtained text content to determine whether wrong text exists. If wrong text exists, a network lexicon or a local lexicon may be called for modifying a wrong word so as to get more accurate text information. Then, the corrected text content is normalized and the accuracy of the normalized result is decided. The normalization of the corrected text content includes normalization of the information such as the font and the number of words of the text content. After the text content is obtained, the text content may be corrected and optimized through a processing mode such as lexical analysis, grammar analysis and semantic analysis to obtain more accurate text information. Through the above-mentioned correction processing and normalization processing of the text content, the accuracy of the text content can be improved, thereby improving the accuracy of the information interaction and improving the user experience. The optimized to-be-sent text content is obtained, and then sent to the target information recipient.

The content processing module 23 provided in the embodiment may further be configured to perform POI matching on the text content, perform an accuracy decision on a matching result, and send to-be-sent text information passing the accuracy decision. The POI may be preset. After the text content is obtained, POI matching is performed on the text content, the accuracy decision is performed on the matching result, and the to-be-sent text content passing the accuracy decision is sent. That is, through the image recognition-based communication apparatus provided in the embodiment, the capture of the POI can be implemented, helping the user quickly recognize the content of interest. The POI is set, and a process of matching the text content with the POI may be creating an index in advance for the keyword in the POI. The index method may be a B-tree index, and then the poi matching is performed according to the index tree. In addition, in order to improve storage efficiency, the POI may be compressed and stored using the compression algorithm of zip.

Through the image recognition-based communication apparatus provided in the embodiment, a to-be-scanned picture is focused on according to a determined focus area, and picture information in the focus area is processed to obtain corresponding text information. That is, image recognition can be conveniently implemented, thereby improving efficiency of image recognition, improving communication efficiency between RCS clients, and improving user experience.

### Embodiment 3:

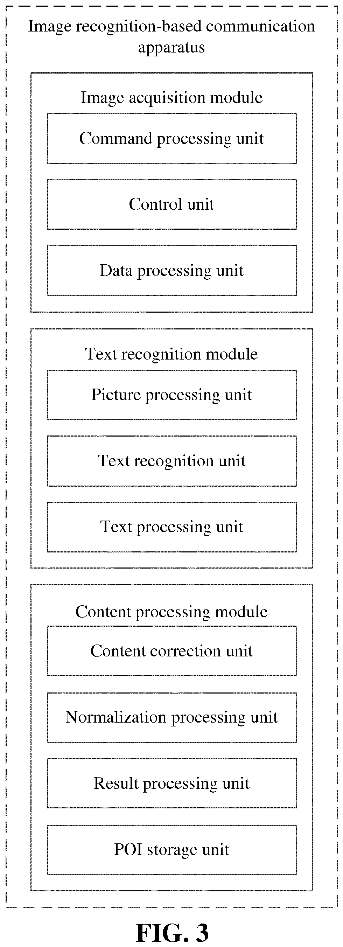

The present embodiment provides an image recognition-based communication apparatus. Referring to FIG. 3, the apparatus includes an image acquisition module, a text recognition module and a content processing module. The image acquisition module includes a command processing unit, a control unit and a data processing unit. The command processing unit is responsible for camera command management, such as starting a camera, controlling a focal length. The control unit is responsible for some key control algorithms in the image acquisition process. For example, the focal length of the camera is adjusted according to a certain point area selected by the user in the image; or based on the preliminary recognition result of the previous text content recognition, a scaling factor is calculated, the image enlargement target is set, and the picture display range is controlled. The data processing unit is responsible for processing an image captured by the camera and save the picture in a certain format. The text recognition module is connected to the image processing module and the content processing module, and may include a picture processing unit, a text recognition unit, and a text processing unit. The picture processing unit is responsible for pre-processing a picture, and the pre-processing includes performing segmentation and correction on the picture to obtain a main area portion and a main content area, and then performing processing on the main area portion by using algorithms such as denoising, enhancing, smoothing and sharpening. The text recognition unit may have a function of recognizing an image in the main area to obtain the text content. The text processing unit may have a function of processing recognized text and storing the text content in a certain format. In addition, the content processing module is connected to the image acquisition module and the text recognition module, and may include a content correction unit, a normalization processing unit and a result processing unit. The content correction unit may be responsible for checking and correcting wrong text. For example, correction and optimization are performed through lexical analysis, grammar analysis and semantic analysis to obtain more accurate text information. The normalization processing unit may be responsible for normalizing the content text. For example, according to the actual situation of the image, corresponding typesetting is performed, and the font and the number of words are normalized to make the result more convenient for use. The result processing unit may be responsible for deciding whether the accuracy of the result meets the requirement, and if the requirement is not met, the image is re-acquired for recognition until a satisfactory effect is obtained. The text content is then sent to the information receiver via an RCS client program. The content processing module in the embodiment may further include a POI storage module. That is, a POI may be stored in the POI storage module. When the text content is obtained, matching is performed on the text content and the POI in the POI storage module, and the matched POI is sent to the corresponding information receiver.

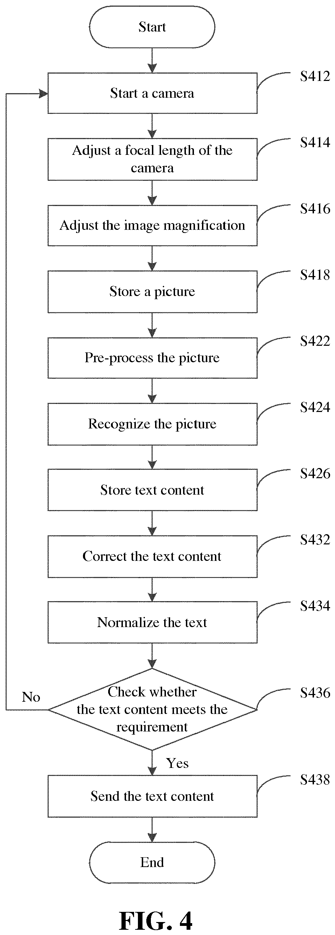

Based on the above-mentioned image recognition-based communication apparatus, the embodiment provides an image recognition-based communication method. The method may enable viewed content to be quickly transmitted between users, and the transmitted content is observed and understood by the sender and has accurate meaning and purpose. As shown in FIG. 4, the method includes the steps described below.

In step S412, a camera is started.

The command processing unit of the image acquisition module starts the camera, performs a necessary initialization operation, and prepares for shooting.

In step S414, a focal length of the camera is adjusted.

The control unit of the image acquisition module calculates the focal length of the camera according to a certain point area in the image selected by the user, and then sends the calculation result to the command processing unit of the image acquisition module to adjust and control the focal length of the camera.

In step S416, the image magnification is adjusted.

The control unit of the image acquisition module calculates a font deviation factor based on the previous preliminary recognition result and according to a font deviation factor calculation formula, and the manner of calculating the font deviation factor is the same as the manner of calculating the scaling factor. Then the command processing unit of the image acquisition module sets an image enlargement target and controls the display range of the picture.

In step S418, a picture is stored.

The data processing unit of the image acquisition module stores the picture captured by the camera in a specified format.

In step S422, the picture is pre-processed.

The picture processing unit of the text recognition module first performs segmentation and tilt correction on the picture to obtain a main area portion, and then performs processing by using algorithms such as denoising, enhancing, smoothing, and sharpening.

In step S424, the picture is recognized.

The text recognition unit of the text recognition module recognizes an image in the area to obtain the text content. The text content may be obtained through feature extraction and dimensionality reduction.

In step S426, the text content is stored.

The text processing unit of the text recognition module stores the recognized text content in a certain format.

In step S432, the text content is corrected.

The content correction unit of the content processing module checks and corrects wrong text, for example, performs correction and optimization through lexical analysis, grammar analysis and semantic analysis to avoid fundamental errors and obtain more accurate text information.

In step S434, the text is normalized.

The normalization processing unit of the content processing module normalizes the result content text. For example, according to the actual situation of the image, corresponding typesetting is performed, the font is optimized and adjusted, and the number of words is cut to make the text content more normalized.

In step S436, it is checked whether the text content meets the requirement.

The result processing unit of the content processing module decides whether the accuracy of the text normalization processing result meets the requirement. If the requirement is not met, the step S412 is performed, and the image is re-acquired for recognition until a satisfactory effect is obtained. If the requirement is met, a step S438 is performed, and the result is sent to the message receiver.

In step S438, the text content is sent.

The result processing unit of the content processing module sends the result to the message receiver to implement information transmission between persons.

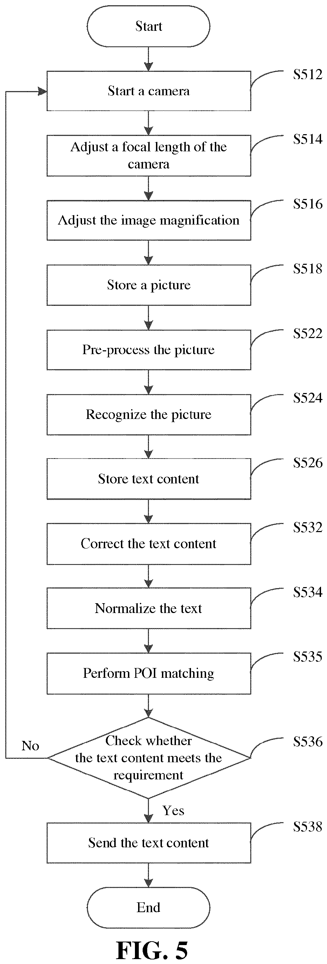

The embodiment further provides a method that may be used for capture of POI to help users quickly recognize content of interest and improve communication efficiency. Referring to FIG. 5, the method includes the steps described below.

In step S512, a camera is started.

In step S514, a focal length of the camera is adjusted.

In step S516, the image magnification is adjusted.

In step S518, a picture is stored.

In step S522, the picture is pre-processed.

In step S524, the picture is recognized.

In step S526, the text content is stored.

In step S532, the text content is corrected.

In step S534, the text is normalized.

The above steps S512 to S534 have the same processing flow as the aforementioned steps S412 to S434. Based on this, a step S535 is further included to perform POI matching.

In step S535, POI matching is performed.

The POI storage unit may be responsible for managing the POI of the user. The user should edit POIs in advance and store them in a list. In order to improve the retrieval efficiency, an index may be created in advance for the keyword, and the index method may be a B-tree index. In order to improve storage efficiency, the POIs may be compressed and stored using the compression algorithm of zip. After the text content is obtained, matching is performed on the text content and the POIs, and the content, which matches a POI, is screened out. The step of screening out the content matching the POI may be performing keyword matching according to the POI, and storing the matched content text. This matching is a full-text retrieval process, and a sorting algorithm may be used to sort the POIs.

In step S536, it is checked whether the text content meets the requirement.

The result processing unit of the content processing module decides whether the accuracy of the text normalization processing result meets the requirement. If the requirement is not met, the step S512 is performed, and the image is re-acquired for recognition until a satisfactory effect is obtained. If the requirement is met, a step S538 is performed, in which the result is sent to the message receiver. In addition, the method further includes that it is determined whether the accuracy of the result of the POI matching passes. If the accuracy of the result of the text normalization processing reaches the requirement and the accuracy of the result of the POI matching fails to pass, the POI matching may be re-performed; or the step S512 is performed, in which the image is re-acquired for recognition until a satisfactory effect is obtained.

In step S538, the text content is sent.

The result processing unit of the content processing module sends the result to the message receiver to implement information transmission between terminals.

The image recognition-based communication apparatus and method provided in the embodiment can make the expression information more clear and accurate than the method of only sending the picture. Compared with the traditional method of calling the third-party image recognition tool, the apparatus and method can provide more consistent and unified operations of image acquisition and text recognition processing, which provides more convenience to the user; and since the RCS client program automatically recognizes the text information from the image, the key information can be obtained through only a simple selection and confirmation operation, thereby improving the communication efficiency between the RCS clients. In addition, during image acquisition and for a certain point in the image selected by the user, the camera can adjust the focal length according to the point, the RCS client program recognizes the image of the adjacent area of the point, obtains the text content, and then optimizes and adjusts the magnification of the camera image. Thus, the image font size can reach a state most suitable for reading, so that better use effect is achieved for the user. In addition, based on the image recognition-based communication method and apparatus provided in the present invention, the POI is captured, which helps the user to quickly obtain the content of interest. In some scenarios with a large amount of information, such as in places like crowed areas and parades, a variety of signs may exist, and the entire newspaper, book, and photo has a large amount of text information.

In this case, the image recognition-based communication method and apparatus provided in the embodiment can be used for extracting the text content corresponding to the POI and obtaining more accurate information, which can provide better user experience at the same time.

The image recognition-based communication apparatus provided in the embodiment may be configured on a terminal device such as a mobile phone, a personal computer (PC) or a tablet computer, so that the user can transmit information with other user terminals through the above terminal device.

An embodiment of the present invention further provides a computer-readable storage medium, which is configured to store computer-executable instructions for executing the method in any embodiment described above.

The computer-readable storage medium may be a transient computer-readable storage medium or a non-transient computer-readable storage medium.

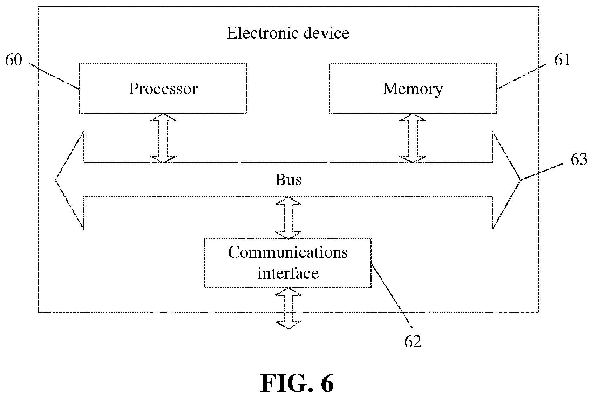

An embodiment of the present invention further provides a structural diagram of an electronic device. Referring to FIG. 6, the electronic device includes: at least one processor 60 (FIG. 6 shows one processor 60 by way of example) and a memory 61, and may further include a communications interface 62 and a bus 63. The processor 60, the communications interface 62 and the memory 61 may communicate with each other through the bus 63. The communications interface 62 may be used for information transmission. The processor 60 may call logic instructions in the memory 61 to execute the method described in the above-mentioned embodiments.

In addition, the logic instructions in the memory 61 may be implemented in the form of a software functional unit and, when sold or used as an independent product, may be stored in a computer-readable storage medium.

As a computer-readable storage medium, the memory 61 may be used for storing software programs and computer-executable programs, such as program instructions/modules corresponding to the method in the embodiments of the present invention. The processor 60 operates the software programs, instructions and modules stored in the memory 61 to execute function applications and data processing, that is, to implement the image recognition-based communication method in the above method embodiments.

The memory 61 may include a program storage area and a data storage area. The program storage area may store an operating system, as well as an application program required for at least one function. The data storage area may store data created depending on use of a terminal device. In addition, the memory 61 may include a high-speed random access memory, and may further include a non-volatile memory.

The technical solutions of the embodiments of the present invention may be embodied in the form of a software product. The software product is stored in a storage medium, including one or more instructions for enabling a computer device (which may be a personal computer, a server, a network device, etc.) to execute all or part of the steps of the method in the embodiments of the present invention. The foregoing storage medium may be a non-transient storage medium, including a USB flash disk, a mobile hard disk, a read-only memory (ROM), a random access memory (RAM), a magnetic disk, an optical disk or another medium capable of storing program codes, or may be a transient storage medium.

Apparently, it should be understood by those skilled in the art that each of the modules or steps in the embodiments of the present invention described above may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a computer storage medium (such as a ROM/RAM, a magnetic disk or an optical disk) and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. Therefore, the present invention is not limited to any specific combination of hardware and software.

The above content is a detailed description of the present invention in conjunction with the embodiments, and the implementation of the present invention is not limited to the description. For those skilled in the art to which the present invention pertains, a number of simple deductions or substitutions may be made without departing from the embodiments of the present invention and should fall within the protection scope of the present invention.

### INDUSTRIAL APPLICABILITY

With the image recognition-based communication method and apparatus provided in the present application, the image recognition can be conveniently implemented, thereby improving efficiency of image recognition, improving communication efficiency between RCS clients, and improving user experience.

## Claims

1. An image recognition-based communication method, comprising:
focusing on a to-be-acquired picture according to a determined focus area; and
processing picture information in the focus area to obtain corresponding text information.

2. The method of claim 1, wherein before processing the picture information in the focus area to obtain the corresponding text information, the method further comprises:
scaling the picture according to a preset scaling rule.

3. The method of claim 2, wherein scaling the picture according to the preset scaling rule comprises:
determining a scaling factor corresponding to the picture according to a font size of the picture, and scaling the picture according to the scaling factor.

4. The method of any one of claims 1 to 3, wherein before processing the picture information in the focus area to obtain the corresponding text information, the method further comprises:
performing segmentation and tilt correction on the picture in the focus area to obtain a main content area, and processing the main content area using at least one of following algorithms: denoising, enhancing, smoothing, and sharpening.

5. The method of claim 4, wherein processing the picture information in the focus area to obtain the corresponding text information comprises:
obtaining text information of the main content area through feature extraction and/or dimensionality reduction.

6. The method of any one of claims 1 to 3, wherein after processing the picture information in the focus area to obtain the corresponding text information, the method further comprises:
performing point of interest (POI) matching on the text information, performing an accuracy decision on a matching result, and sending text information passing the accuracy decision.

7. An image recognition-based communication apparatus, comprising:
an image acquisition module, which is configured to focus on a to-be-acquired picture according to a determined focus area; and
a content processing module, which is configured to process picture information in the focus area to obtain corresponding text information.

8. The apparatus of claim 7, wherein the image acquisition module is further configured to:
before the picture information in the focus area is processed to obtain the corresponding text information, scale the picture according to a preset scaling rule.

9. The apparatus of claim 8, wherein the image acquisition module is further configured to:
determine a scaling factor corresponding to the picture according to a font size of the picture, and scale the picture according to the scaling factor.

10. The apparatus of any one of claims 7 to 9, further comprising:
a text recognition module, which is configured to perform segmentation and tilt correction on the picture in the focus area to obtain a main content area, and processing the main content area using at least one of following algorithms: denoising, enhancing, smoothing, and sharpening.

11. The apparatus of claim 10, wherein the text recognition module is further configured to:
obtain text information of the main content area through feature extraction and/or dimensionality reduction.

12. The apparatus of any one of claims 7 to 9, wherein the content processing module is further configured to:
perform point of interest (POI) matching on the text information, perform an accuracy decision on a matching result, and send text information passing the accuracy decision.

13. A computer-readable storage medium, storing computer-executable instructions, wherein the computer-executable instructions are configured to execute the method of any one of claims 1 to 6.
